# EUROPEAN PATENT SPECIFICATION

(11) **EP 4 700 289 B1**
(45) Date of publication and mention of the grant of the patent: **14.10.2026**
(21) Application number: 25188487.0
(22) Date of filing: 09.07.2025
(51) Int. Cl.: F23D 14/04, F23D 14/14, F23D 14/70, F23D 23/00, A47J 37/07, A47J 37/06, F24C 3/08

(54) **GAS BURNER UNIT AND HEAT-COOKING APPARATUS PROVIDED WITH THE SAME**
GASBRENNER UND DAMIT AUSGESTATTETES WÄRMEKOCHGERÄT
UNITÉ DE BRÛLEUR À GAZ ET APPAREIL DE CUISSON ÉQUIPÉ DE CELLE-CI

(30) Priority: 19.08.2024 JP 2024137689
(43) Date of publication of application: 25.02.2026
(73) Proprietor: Rinnai Corporation, Nagoya-shi, Aichi 454-0802 (JP)
(72) Inventor: NONOYAMA, Masao, Nagoya-shi, 454-0802 (JP); SUZUKI, Yosuke, Nagoya-shi, 454-0802 (JP); TSUGE, Shingo, Nagoya-shi, 454-0802 (JP); IKUTA, Hiroyuki, Nagoya-shi, 454-0802 (JP); SATAKE, Ryo, Nagoya-shi, 454-0802 (JP)
(74) Representative: Haseltine Lake Kempner LLP

(56) References cited:
- CH-A5- 602 071
- US-A- 4 627 408
- US-A- 5 473 980
- US-A1- 2006 112 949
- US-A1- 2009 199 841

## Description

### TECHNICAL FIELD

The invention relates to a gas burner unit and a heat-cooking apparatus provided with the same. More particularly, the invention relates to those which are suitable when hydrogen gas is supplied to a gas burner and the hydrogen gas ejecting from each of flame holes is caused to diffuse and combust.

### BACKGROUND ART

Conventionally, there are known, provided that two horizontally orthogonal directions are defined as an X-axis direction and a Y-axis direction, respectively, a gas burner unit provided with a gas burner in which a plurality of upwardly-opening flame holes are formed along the X-axis direction and with a hot plate that is disposed above the gas burner and of which a cross-sectional shape is upwardly convex (mountain-shaped), and a heat-cooking apparatus provided with the gas burner in Patent Document No. 1, for example. In these, the hot plate is caused to heat in a red-hot state by combustion gas generated by combustion of fuel gas ejecting from each of the flame holes of the gas burner, and food such as meat or fish, which is mounted on a grill net of the heat-cooking apparatus, can be heat-cooked (grill-cooked) by far-infrared radiation from the hot plate heated in the red-hot state.

In the above-mentioned conventional example, although a plurality of vent holes through which the combustion gas is caused to pass are formed in the hot plate, only one vent-hole row, in which each of the vent holes is aligned in the X-axis direction, is formed on both sides in the Y-axis direction of the hot plate, respectively. Therefore, a draught effect accompanying passage of the combustion gas through each of the vent holes does not appear strongly, and the amount of the combustion gas overflowing from a lower end of the hot plate is large, resulting in a problem that the hot plate cannot be uniformly heated in the red-hot state. This is more remarkable when hydrogen gas unmixed with primary air is supplied to the gas burner and the hydrogen gas ejecting from each of the flame holes is caused to diffuse and combust.

A gas burner presenting the features of the preamble of claim 1 is known from each of publications US2009/199841 and US4627408. Further related known gas burners are disclosed in US2006/112949, US5473980, and CH602071.

### PRIOR ART

### PATENT DOCUMENTS

### SUMMARY OF INVENTION PROBLEM THAT THE INVENTION IS TO BE SOLVED

This invention has been made in view of the above-mentioned points and addresses the problem of providing a gas burner unit and a heat-cooking apparatus provided with the gas burner unit, in both of which the hot plate is uniformly heated in the red-hot state.

### MEANS FOR SOLVING THE PROBLEM

In order to solve the above-mentioned problem, a gas burner B unit of a first invention, provided with two horizontally orthogonal directions that are defined as an X-axis direction and a Y-axis direction, respectively, comprising: a gas burner 2 in which a plurality of upwardly-opening flame holes are formed along the X-axis direction; and a hot plate 3 that is disposed above the gas burner and has an upwardly convex shape, wherein a plurality of vent holes 31, each of which causes combustion gas generated by combustion in the gas burner to pass therethrough, are formed in the hot plate along the X-axis direction, and a plurality of vent-hole rows consisting of the vent holes aligned in the X-axis direction are arranged in parallel in the Y-axis direction, and wherein each of the vent holes is formed along lower surfaces of a plurality of cut-and-raised piece parts 34 by cutting and raising the hot plate upward in a manner to open outward in the Y-axis direction, characterized in that: there is provided, in the vent-hole rows adjacent to each other in the Y-axis direction, a vent-hole row on an inner-side and a vent-hole row on an outer-side in the Y-direction, in which there are made a first vent-hole row 32₁ and a second vent-hole row32₂, respectively, each of the vent holes of the first vent-hole row being configured to overlap in the Y-axis direction with at least a portion of an adjacent vent hole of the second vent-hole row, an outer-edge 34b in the Y-axis direction of each of the cut-and-raised piece parts of the first vent-hole row and an inner-edge in the Y-axis direction of each of the cut-and-raised piece parts of the second vent-hole row are disposed close to each other so that the combustion gas flows along upper surfaces of the cut-and-raised piece parts of the second vent-hole row. In addition, a heat-cooking apparatus H of a second invention is provided with the above-mentioned gas burner unit.

According to the invention, when the fuel gas is supplied to the gas burner and caused to combust, a draught effect appears strongly by passing the combustion gas through each of the vent holes in a plurality of vent-hole rows. This allows the combustion gas to reach a central part in the Y-axis direction, which is the uppermost part of a lower surface of the hot plate. Then, since a plurality of vent-hole rows are arranged in parallel in the Y-axis direction, the combustion gas is directed not only to each of the vent holes in the vent-hole row located on the innermost side in the Y-axis direction, but also to each of the vent holes in the vent-hole row located on an outer-side in the Y-axis direction, and passes through the vent holes. This causes the hot plate to heat from a lower-surface side thereof. In addition, since the combustion gas having passed through each of the vent holes in the first vent-hole row flows along upper surfaces of the cut-and-raised piece parts of the second vent-hole row, the hot plate is also heated from an upper-surface side thereof by the combustion gas. As a result, the hot plate can be uniformly and effectively heated in a red-hot state over an entire surface thereof by heating the hot plate from both the upper and lower surfaces. In this case, in order to enhance heating effect of the hot plate from the upper-surface side, it is preferable that an opening-width Wd along the X-axis direction of each of the vent holes in the first vent-hole row is the same as that of each of the vent holes in the second vent-hole row, and that each of the vent holes in the first vent-hole row and each of the vent holes in the second vent-hole row are aligned in the Y-axis direction.

In the invention, it is preferable that the cut-and-raised piece parts are cut and raised in a bridge shape and both ends 34a in the X-axis direction of each of the cut-and-raised piece parts are connected to the hot plate. According to this, the combustion gas having passed through each of the vent holes in the first vent-hole row can be definitely guided to the upper surface of the cut-and-raised piece parts of the second vent-hole row, which is advantageous.

In the invention, it is suitable in a case where fuel gas supplied to the gas burner is hydrogen gas unmixed with primary air and is caused to eject from the flame holes and to diffuse and combust. That is, when the hydrogen gas is caused to diffuse and combust, a large amount of secondary air is required. However, in the invention, since a plurality of vent-hole rows, each of which consists of vent holes aligned in the X-axis direction, are arranged in parallel in the Y-axis direction, as above-mentioned, the draught effect appears strongly. Therefore, a large amount of the secondary air is supplied to the hydrogen gas ejecting from each of the flame holes of the gas burner by the draught effect, so that combustion stability can be improved. In addition, the high-temperature combustion gas (mainly, water vapor gas), which is generated by the combustion of hydrogen gas, comes into contact with an object to be cooked (hereafter referred to as "to-be-cooked object") through each of the vent holes, so that not only the to-be-cooked object can be heated but also a washing-away effect of fat and salt components contained in the to-be-cooked object can be expected.

### BRIEF DESCRIPTION OF THE DRAWINGS

FIG. 1 is a perspective view of a heat-cooking apparatus of an embodiment of the invention.
FIG. 2 is a cut side view cut along a II-II line of FIG. 1.
FIG. 3 is a cut front view cut along a III-III line of FIG. 2.
FIG. 4 is a perspective view of a gas burner unit of an embodiment of the invention, with which the heat-cooking apparatus of the embodiment is provided.
FIG. 5 is a plan view of the gas burner unit shown in FIG. 4, of which a part is omitted.
FIG. 6 is a cross-sectional view cut along a VI-VI line of FIG. 5.
FIG. 7 is an analysis result of a combustion gas flow when hydrogen gas is caused to diffuse and combust in the gas burner.

### MODE FOR CARRING OUT THE INVENTION

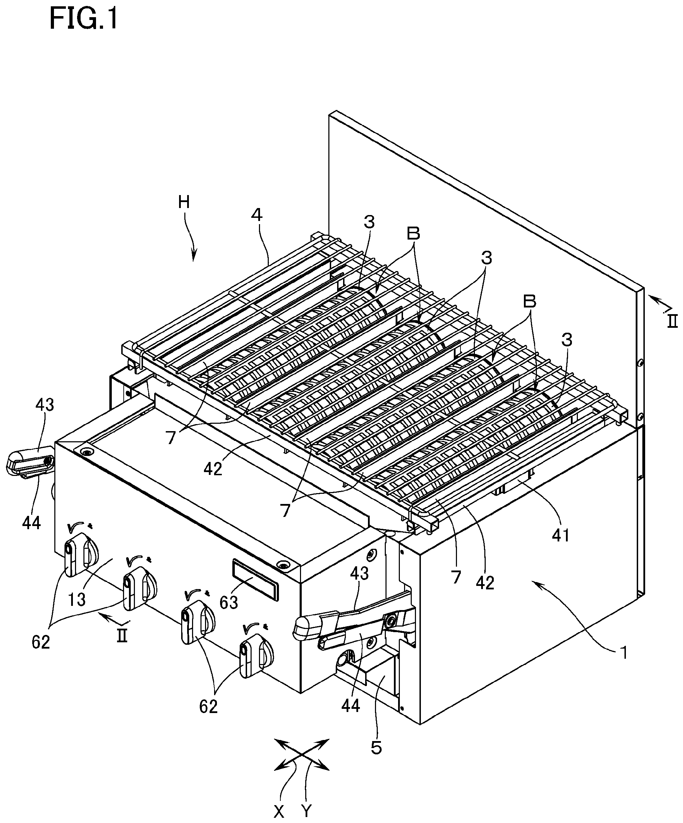

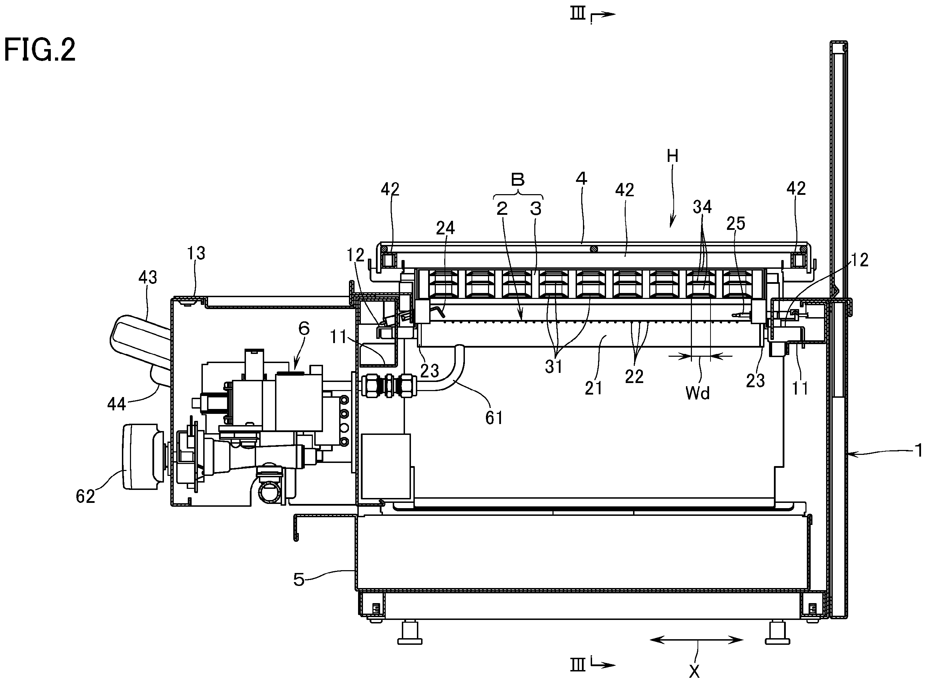

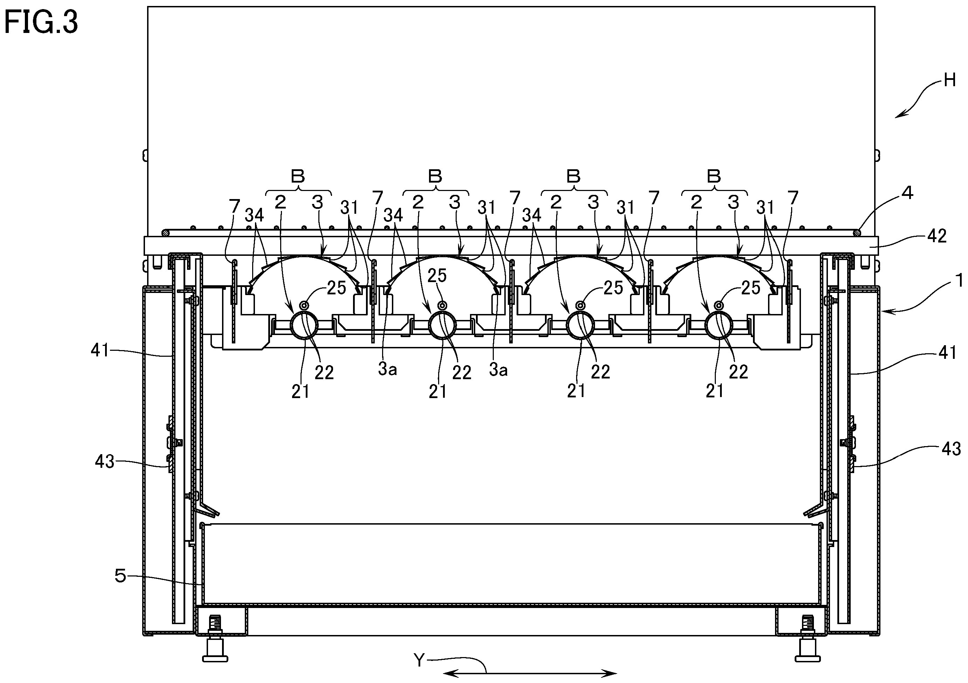

With reference to FIGS. 1 to 3, a heat-cooking apparatus H of an embodiment of the invention is used for grill-cooking of a to-be-cooked object, such as meat or fish, has a case 1 of which an upper surface is opened, and is provided with gas burner units B of an embodiment of the invention at an upper part inside the case 1. Provided that two horizontally orthogonal directions are defined as an X-axis direction and a Y-axis direction, respectively, each of the gas burner units B is provided with a gas burner 2 that is longitudinal in the X-axis direction and a hot plate 3 made of metal, which is disposed above the gas burner 2 and of which a sectional shape is upwardly convex (specifically, upwardly convex and arcuate, e.g. with a concave surface of the hot plate 3 facing the gas burner 2 and a convex surface of the hot plate 3 facing away from the gas burner 2). In the embodiment, a plurality of gas burner units B (specifically, four units) are arranged in parallel in the Y-axis direction.

A grill net 4 on which a to-be-cooked object is located is disposed above the case 1. The grill net 4 is mounted on a supporting frame 42 assembled in a rectangular shape, which is connected to each of upper ends of vertically-movable props 41 provided on both side parts in the Y-axis direction of the case 1. Each of the props 41 moves vertically accompanying vertical swinging of an operating lever 43 protruding to one side in the X-axis direction from the case 1. A locking lever 44 locking the operating lever 43 at an arbitrary swinging-position is attached to the operating lever 43. Then, the swinging operation of the operating lever 43 is possible by pulling up and unlocking the locking lever 44. In addition, a soup bowl 5 being freely drawn forward and inserted backward is disposed at a lower part in the case 1.

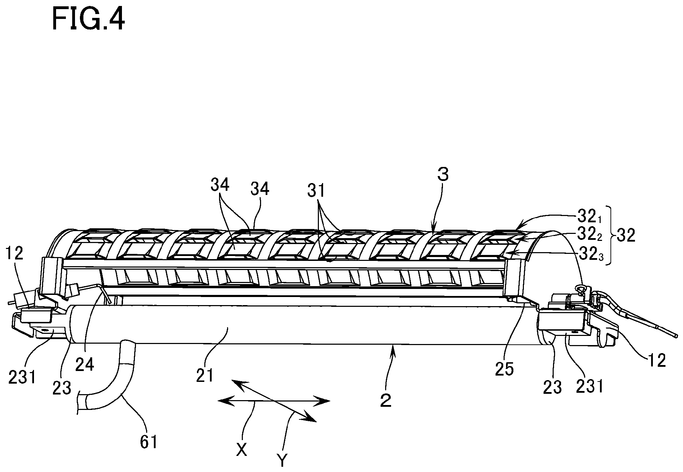

The gas burner 2 has a burner main body 21 that is longitudinal in the X-axis direction and pipe-shaped, a plurality of upwardly-opening flame holes 22 are formed in an upper part of the burner main body 21 along the X-axis direction. In the embodiment, two flame-hole rows each of which consists of a plurality of flame holes 22 along the X-axis direction are provided adjacent to each other in the Y-axis direction. In addition, a hole diameter of each of the flame holes 22 is set to be smaller than that (0.6 mm) of the so-called backfire limit. Both end parts in the X-axis direction of each of the burner main bodies 21 are closed by cock bodies 23, 23, respectively. With reference also to FIG. 4, a protruding part 231 protruding to an outer-side in the X-axis direction is provided with each of the cock bodies 23. Then, each of the gas burners 2 is fixed and supported by fixing the protruding part 231 of each of the cock bodies 23 to a supporting bracket 12 for each of the gas burner units B, which is fixed to each of frames 11 on both sides in the X-axis direction of the upper part of the case 1. Each of the supporting brackets 12 also supports each of end parts in the X-axis direction of the hot plate 3. In addition, an ignition electrode 24 as an igniter, which is located above an end part on one side in the X-axis direction, and a thermocouple 25 as a flame detector, which is located above the other side in the X-axis direction, are attached to each of the gas burners 2.

Hydrogen gas unmixed with primary air, as fuel gas, is supplied to each of the gas burners 2 through a connecting passage 61 as a downstream end part of a gas supply passage, which extends from each of valve units 6 inside a box 13 attached to a surface on one side in the X-axis direction of the case 1. The hydrogen gas ejects from the flame holes 22 of each of the gas burners 2 and diffuses and combusts. Operating knobs 62 for each of the valve units 6 and a power switch 63 activating a controller (not shown) for each of the valve units 6 are disposed on an outer-surface on one side in the X-axis direction of the box 13.

A partition plate 7 is provided and stands between the gas burner units B, B adjacent to each other in the Y-axis direction. Even though oil and fat or the like dropped down from the to-be-cooked object are scattered on the hot plate 3 of each of the gas burner units B and fall along the hot plate 3, the partition plate 7 can prevent the oil and fat or the like from adhering to the flame holes 22 of each of the gas burners 2 of the gas burner units 3 adjacent to each other. The partition plate 7 is supported by inserting lower parts of both end parts in the X-axis direction thereof into unshown slits formed in each of the frames 11 on both sides in the X-axis direction of the upper part of the case 1. In addition, the partition plate 7 is also provided and stands on an outer-side in the Y-axis direction of the gas burner unit B located on the outermost side in the Y-axis direction.

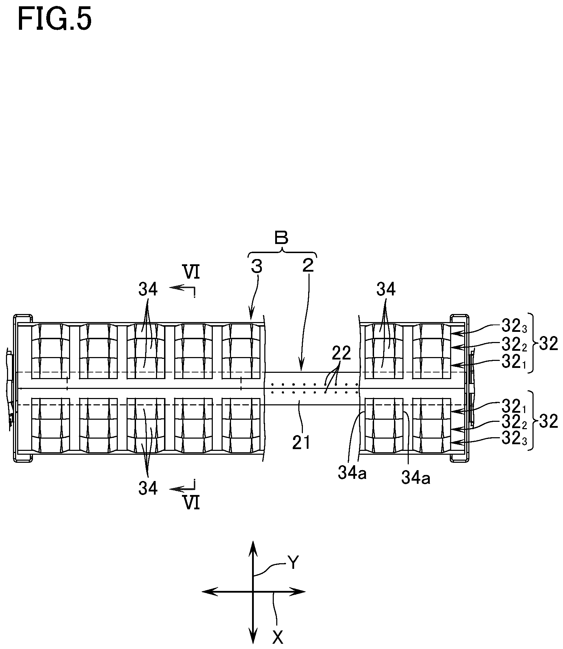

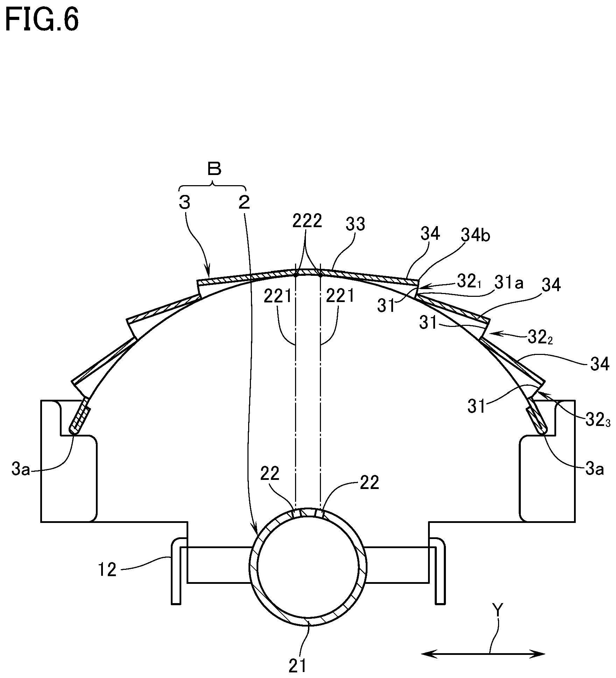

Each of the hot plates 3 is disposed so that each of lower-edge ends 3a on both sides in the Y-axis direction is located above each of the flame holes 22 of each of the gas burners 2. With reference to FIGS. 5, 6, hot plates 3 has a plurality of vent holes 31, through which a combustion gas generated by the combustion of the fuel gas ejecting from each of the flame holes 22 of each of the gas burners 2 passes, are formed along the X-axis direction, and a plurality of vent-hole rows 32 consisting of the vent holes 31 aligned in the X-axis direction are arranged in parallel in the Y-axis direction. In the embodiment, provided that an apex part of each of the hot plates 3, which contains intersection points 222, 222 at which hole-axis lines 221, 221 extending straight upward from the flame holes 22 and each of the hot plate 3 intersect, is defined as a non-vent-hole region 33 in which no vent hole 31 is formed, three vent-hole rows 32 are provided on both sides in the Y-axis direction of the non-vent-hole region 33 (hereinafter, a vent-hole row on the innermost-side in the Y-axis direction is defined as a first vent-hole row 32₁, a vent-hole row adjacent to the first vent-hole row 32₁ is defined as a second vent-hole row 32₂, and a vent-hole row on the outermost-side in the Y-axis direction is defined as a third vent-hole row 32₃). It should be noted that a sum of opening areas of each of the vent hole 31 is set in a range of 5% to 25% of a surface area of each of the hot plates 3. Although three vent hole rows (32) are depicted either side of the non-vent-hole region 33, it is also envisaged that other numbers of vent-hole rows may be provided.

Each of the vent holes 31 is formed along a lower surface of cut-and-raised piece parts 34 of each of the hot plates 3, which are cut and raised upward in a manner to open outward in the Y-axis direction. Each of the cut-and-raised piece parts 34 is cut and raised in a bridge shape so that each of opening-widths Wd along the X-axis direction is the same, and both ends 34a, 34a in the X-axis direction of each of the cut-and-raised piece parts 34 are connected to each of the hot plates 3. An outer-edge 34b in the Y-axis direction of each of the cut-and-raised piece parts 34 is located outward in the Y-axis direction from (e.g. extends beyond) an outer-edge 31a in the Y-axis direction of each of the vent holes 31. (The outer-edge 31a in the Y-axis direction of each of the vent holes 31 may correspond to the inner-edge of the cut-and-raised piece part 34 of the next vent-hole row.) Since known methods can be used for a cutting-and-raising processing of each of the cut-and-raised piece parts 34 to the hot plate 3, the detailed description of the method is omitted here. In addition, the number of the vent holes 31 in each of the first, second and third vent-hole rows 32₁, 32₂, 32₃ is made the same, and the vent holes 31 in the first vent-hole row 32₁, the vent holes 31 in the second vent-hole row 32₂ and the vent holes 31 in the third vent-hole row 32₃ are caused to align in the Y-axis direction. Then, each of the hot plates 3 is caused to heat in the red-hot state by the combustion gas generated by the combustion of the fuel gas ejecting from each of the flame holes 22 of each of the gas burners 2, and the to-be-cooked object on the grill net 4 is heat-cooked by far-infrared radiation radiated from each of the hot plates 3 and the combustion gas having passed through the vent holes 31.

According to the above-mentioned embodiment, when the hydrogen gas is supplied to and combusted in each of the gas burners 2, the combustion gas (mainly, the water vapor gas) is caused to pass through each of the vent holes 31 in the first, second and third vent-hole rows 32₁, 32₂, 32₃, and thus a draught effect strongly appears. This causes the combustion gas to reach each of the non-vent-hole regions 33 as a central part in the Y-axis direction of the lower surface of each of the hot plates 3. Then, since the first, second and third vent-hole rows 32₁, 32₂, 32₃ are arranged in parallel in the Y-axis direction, the combustion gas is induced into and passes through not only each of the vent holes 31 in the first vent-hole row 32₁ located on the innermost-side in the Y-axis direction, but also each of the vent holes 31 in the second and third vent-hole rows 32₂, 32₃, and each of the hot plates 3 is heated from the lower surface side thereof. In addition to this, since the combustion gas having passed through each of the vent holes 31 in the first vent-hole row 32₁ flows along upper surfaces of the cut-and-raised piece parts 34 of the second vent-hole row 32₂, and the combustion gas having passed through each of the vent holes 31 in the second vent-hole row 32₂ flows along upper surfaces of the cut-and-raised piece parts 34 of the third vent-hole row 32₃, each of the hot plates 3 is also heated from an upper-surface side thereof. Furthermore, since the cut-and-raised piece parts 34 are formed as above-mentioned, the combustion gas having passed through each of the vent holes 31 in the first vent-hole row 32₁ is definitely guided to the upper surfaces of the cut-and-raised piece parts 34 in the second vent-hole row 32₂ located on the outer-side in the Y-axis direction, and the combustion gas having passed through each of the vent holes 31 in the second vent-hole row 32₂ is definitely guided to upper surfaces of the cut-and-raised piece parts 34 of the third vent-hole row 32₃. As a result, each of the hot plates 3 is heated from both the upper and lower surfaces thereof, and thus each of the hot plates 3 can be uniformly and effectively heated in the in-hot state over an entire surface thereof. In addition, since the combustion gas having passed through each of the vent holes 31 comes into contact with the to-be-cooked object, not only the to-be-cooked object can be heated, but also a washing-away effect of the fat and salt components contained in the to-be-cooked object by the water vapor can be hoped.

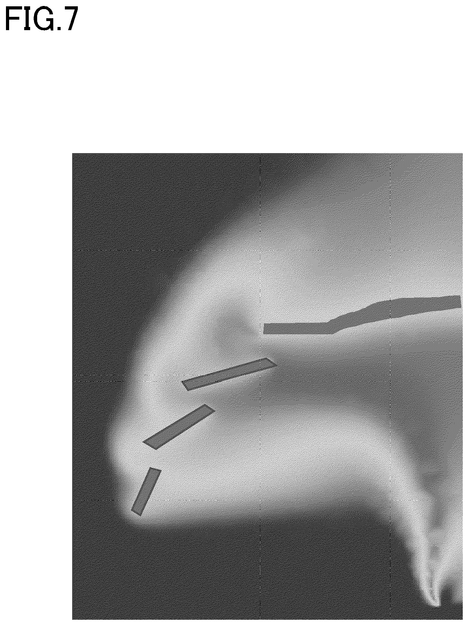

Here, to confirm effects of the invention, a combustion gas flow was analyzed when a single gas burner unit B was used and the hydrogen gas was combusted by the gas burner 2. At the time of the analysis, under atmospheric pressure at a room temperature of 25 °C, an input as a heat amount of the hydrogen gas per unit time was set to 1,500 kcal/h (1744 W). According to this, as shown in FIG. 7 illustrating a cross-section of the hot plates 3, it was confirmed that a high-temperature combustion gas flows along both the upper and lower surfaces of the hot plate 3.

In the above-mentioned embodiment, although descriptions were made with reference to figures, the invention is not limited thereto. In the above-mentioned embodiment, although the descriptions were made of the example in which the opening-width and the number of the vent holes 31 in each of the first, second and third vent-hole rows 32₁, 32₂, 32₃ are coincident and arranged in parallel in the Y-axis direction, as long as at least one portion of each of the vent holes 31 in each of the first, second and third vent-hole rows 32₁, 32₂, 32₃ overlaps in the Y-axis direction, the invention is not limited to the above-mentioned embodiment. For example, a pitch between side-edges of the cut-and-raised piece parts 34 adjacent to each other in the X-axis direction may be caused to shift by a half between the first vent-hole row 32₁ and the second vent-hole row 32₂, and between the second vent-hole row 32₂ and the third vent-hole row 32₃.

In other words, as depicted in the Figures, each vent hole (31) of one vent-hole row (32₁, 32₂, 32₃) may be linearly aligned in the Y-axis direction with corresponding vent holes (31) of another vent-hole row (32₁, 32₂, 32₃). However, in an alternative arrangement (not depicted), it is also envisaged that vent holes from neighboring rows may not be so aligned in the Y-axis direction. For example, two vent holes that are adjacent to one another in the Y-axis direction and are from neighboring vent-hole rows may be shifted (e.g. offset) relative to each other in the X-axis direction. However, even in this alternative arrangement, one of the vent holes from one of the vent-hole rows may not be completely spaced apart from the adjacent vent hole of the neighboring vent-hole row. In other words, each of the vent holes of a particular vent-hole row may be configured to overlap in the Y-axis direction with at least a portion of an adjacent vent hole of a neighboring vent-hole row.

In the above-mentioned embodiment, although the descriptions were made of the example in which the cross-sectional shape of each of the hot plates 3 is the upwardly convex and arcuate shape. The cross-sectional shape of each of the hot plates 3 is not limited thereto, but may be mountainous or trapezoidal. In addition, although the descriptions were made of the example in which the hydrogen gas is used for the fuel gas, the fuel gas may be made a gas other than the hydrogen gas. Furthermore, although the heat-cooking apparatus of the above-mentioned embodiment performers grill-cooking, the invention is adaptable to a heat-cooking apparatus for other than grill-cooking, such as a stove. In addition, in the above-mentioned embodiment, although the descriptions were made of the example in which each of the gas burners 2 consists of that in which a plurality of the flame holes 22 are formed in the upper part of the pipe-shaped burner main body 21, the gas burner is not limited thereto, but a gas burner of which the burner main body is flat may be used.

### EXPLANATION OF MARKS

- H: Heat-cooking apparatus
- B: Gas unit
- 2: Gas burner
- 22: Flame hole
- 3: Hot plate
- 31: Vent hole
- 31a: Outer-edge in Y-axis direction of vent hole
- 32: Vent-hole row
- 32₁: First vent-hole row
- 32₂: Second vent-hole row
- 32₃: Third vent-hole row
- 34: Cut-and-raised piece part
- 34a: Both ends of cut-and-raised piece part
- 34b: Outer-edge in the Y-axis direction of cut-and-raised piece part
- Wd: Opening-width of vent hole along X-axis direction

## Claims

1. A gas burner unit (B), provided with two horizontally orthogonal directions that are defined as an X-axis direction and a Y-axis direction, respectively, comprising:
a gas burner (2) in which a plurality of upwardly-opening flame holes are formed along the X-axis direction; and
a hot plate (3) that is disposed above the gas burner and has an upwardly convex shape,
wherein a plurality of vent holes (31), each of which causes combustion gas generated by combustion in the gas burner to pass therethrough, are formed in the hot plate along the X-axis direction, and a plurality of vent-hole rows consisting of the vent holes aligned in the X-axis direction are arranged in parallel in the Y-axis direction, and
wherein each of the vent holes is formed along lower surfaces of a plurality of cut-and-raised piece parts (34) by cutting and raising the hot plate upward in a manner to open outward in the Y-axis direction,
wherein
there is provided, in the vent-hole rows adjacent to each other in the Y-axis direction, a vent-hole row on an inner-side and a vent-hole row on an outer-side in the Y-direction, in which there are made a first vent-hole row (32₁) and a second vent-hole row (32₂), respectively, wherein an outer-edge (34b) in the Y-axis direction of each of the cut-and-raised piece parts of the first vent-hole row and an inner-edge in the Y-axis direction of each of the cut-and-raised piece parts of the second vent-hole row are disposed close to each other so that the combustion gas flows along upper surfaces of the cut-and-raised piece parts of the second vent-hole row,
**characterized in**
each of the vent holes of the first vent-hole row being configured to overlap in the Y-axis direction with at least a portion of an adjacent vent hole of the second vent-hole row.

2. The gas burner unit as claimed in claim 1, wherein an opening-width (Wd) along the X-axis direction of each of the vent holes in the first vent-hole row is the same as that of each of the vent holes in the second vent-hole row, and that each of the vent holes in the first vent-hole row and each of the vent holes in the second vent-hole row are aligned in the Y-axis direction.

3. The gas burner unit as claimed in claim 1 or 2, wherein the cut-and-raised piece parts are cut and raised in a bridge shape and both ends (34a) in the X-axis direction of each of the cut-and-raised piece parts are connected to the hot plate.

4. The gas burner unit as claimed in any of claims 1 to 3, wherein fuel gas supplied to the gas burner is hydrogen gas unmixed with primary air and is configured to be caused to eject from the flame holes and to diffuse and combust.

5. A heat-cooking apparatus (H), comprising: the gas burner unit as claimed in any of claims 1 to 4.

## Patentansprüche

1. Gasbrennereinheit (B), die mit zwei horizontal orthogonalen Richtungen versehen ist, die jeweils als eine X-Achsen-Richtung und eine Y-Achsen-Richtung definiert sind, umfassend:
einen Gasbrenner (2), in dem eine Vielzahl von sich nach oben öffnenden Flammenlöchern entlang der X-Achsen-Richtung ausgebildet ist; und
eine Heizplatte (3), die oberhalb des Gasbrenners angeordnet ist und eine nach oben konvexe Form aufweist,
wobei eine Vielzahl von Belüftungslöchern (31), von denen jedes bewirkt, dass Verbrennungsgas, das durch Verbrennung in dem Gasbrenner erzeugt wird, dort hindurchtritt, in der Heizplatte entlang der X-Achsen-Richtung ausgebildet ist, und eine Vielzahl von Belüftungslochreihen, die aus den in der X-Achsen-Richtung ausgerichteten Belüftungslöchern bestehen, in der Y-Achsen-Richtung parallel angeordnet sind, und
wobei jedes der Belüftungslöcher entlang von Unterseiten einer Vielzahl von ausgeschnittenen und aufgebogenen Teilstücken (34) ausgebildet ist, indem die Heizplatte nach oben so ausgeschnitten und aufgebogen ist, dass sie in der Y-Achsen-Richtung nach außen öffnet,
wobei in den in der Y-Achsen-Richtung zueinander benachbarten Belüftungslochreihen eine Belüftungslochreihe auf einer Innenseite und eine Belüftungslochreihe auf einer Außenseite in der Y-Richtung vorgesehen sind, in denen jeweils eine erste Belüftungslochreihe (32₁) und eine zweite Belüftungslochreihe (32₂) gebildet sind,
wobei eine Außenkante (34b) in der Y-Achsen-Richtung von jedem der ausgeschnittenen und aufgebogenen Teilstücke der ersten Belüftungslochreihe und eine Innenkante in der Y-Achsen-Richtung von jedem der ausgeschnittenen und aufgebogenen Teilstücke der zweiten Belüftungslochreihe nahe beeinander angeordnet sind, so dass das Verbrennungsgas entlang von Oberseiten der ausgeschnittenen und aufgebogenen Teilstücke der zweiten Belüftungslochreihe strömt, **dadurch gekennzeichnet, dass** jedes der Belüftungslöcher der ersten Belüftungslochreihe so konfiguriert ist, dass es in der Y-Achsen-Richtung mit mindestens einem Teil eines benachbarten Belüftungslochs der zweiten Belüftungslochreihe überlappt.

2. Gasbrennereinheit nach Anspruch 1, wobei eine Öffnungsbreite (Wd) entlang der X-Achsen-Richtung von jedem der Belüftungslöcher in der ersten Belüftungslochreihe dieselbe ist wie die von jedem der Belüftungslöcher in der zweiten Belüftungslochreihe, und dass jedes der Belüftungslöcher in der ersten Belüftungslochreihe und jedes der Belüftungslöcher in der zweiten Belüftungslochreihe in der Y-Achsen-Richtung ausgerichtet ist.

3. Gasbrennereinheit nach Anspruch 1 oder 2, wobei die ausgeschnittenen und aufgebogenen Teilstücke in einer Brückenform ausgeschnitten und aufgebogen sind und beide Enden (34a) in der X-Achsen-Richtung von jedem der ausgeschnittenen und aufgebogenen Teilstücke mit der Heizplatte verbunden sind.

4. Gasbrennereinheit nach einem der Ansprüche 1 bis 3, wobei Brenngas, das dem Gasbrenner zugeführt wird, Wasserstoffgas ist, das nicht mit Primärluft gemischt ist, und dafür konfiguriert ist, dass bewirkt wird, dass es aus den Flammenlöchern ausgestoßen wird und diffundiert und verbrennt.

5. Wärmekochgerät (H), umfassend: die Gasbrennereinheit nach einem der Ansprüche 1 bis 4.

## Revendications

1. Unité de brûleur à gaz (B), pourvu de deux directions horizontalement orthogonales qui sont définies respectivement comme une direction d'axe X et une direction d'axe Y, comprenant :
un brûleur à gaz (2) dans lequel une pluralité d'orifices de flamme s'ouvrant vers le haut sont formés le long de la direction d'axe X ; et
une plaque chauffante (3) qui est disposée au-dessus du brûleur à gaz et présente une forme convexe vers le haut,
dans laquelle une pluralité d'orifices d'évacuation (31), dont chacun amène des gaz de combustion générés par la combustion dans le brûleur à gaz à passer à travers celui-ci, sont formés dans la plaque chauffante le long de la direction d'axe X, et une pluralité de rangées d'orifices d'évacuation constituées d'orifices d'évacuation alignés dans la direction d'axe X sont disposées parallèlement dans la direction d'axe Y, et
dans laquelle chacun des orifices d'évacuation est formé le long de surfaces inférieures d'une pluralité de parties de pièce découpées et surélevées (34) en découpant et en surélevant la plaque chauffante vers le haut de manière à ce qu'elle s'ouvre vers l'extérieur dans la direction d'axe Y,
dans laquelle il est prévu, dans les rangées d'orifices d'évacuation adjacentes l'une à l'autre dans la direction d'axe Y, une rangée d'orifices d'évacuation située d'un côté interne et une rangée d'orifices d'évacuation située d'un côté externe dans la direction Y, dans lesquelles sont respectivement formées une première rangée d'orifices d'évacuation (32₁) et une seconde rangée d'orifices d'évacuation (32₂),
dans laquelle un bord externe (34b) dans la direction d'axe Y de chacune des parties de pièce découpées et surélevées de la première rangée d'orifices d'évacuation et un bord interne dans la direction d'axe Y de chacune des parties de pièce découpées et surélevées de la seconde rangée d'orifices d'évacuation sont disposés à proximité l'un de l'autre, de sorte que les gaz de combustion s'écoulent le long de surfaces supérieures des parties de pièce découpées et surélevées de la seconde rangée d'orifices d'évacuation, **caractérisée en ce que** chacun des orifices d'évacuation de la première rangée d'orifices d'évacuation est configuré pour chevaucher dans la direction d'axe Y au moins une partie d'un orifice d'évacuation adjacent de la seconde rangée d'orifices d'évacuation.

2. Unité de brûleur à gaz selon la revendication 1, dans laquelle une largeur d'ouverture (Wd) le long de la direction d'axe X de chacun des orifices d'évacuation de la première rangée d'orifices d'évacuation est identique à celle de chacun des orifices d'évacuation de la seconde rangée d'orifices d'évacuation, et chacun des orifices d'évacuation de la première rangée d'orifices d'évacuation et chacun des orifices d'évacuation de la seconde rangée d'orifices d'évacuation sont alignés dans la direction d'axe Y.

3. Unité de brûleur à gaz selon la revendication 1 ou 2, dans laquelle les parties de pièce découpées et surélevées sont découpées et surélevées en forme de pont, et deux extrémités (34a) dans la direction d'axe X de chacune des parties de pièce découpées et surélevées sont reliées à la plaque chauffante.

4. Unité de brûleur à gaz selon l'une quelconque des revendications 1 à 3, dans laquelle un gaz combustible fourni au brûleur à gaz est de l'hydrogène gazeux non mélangé à de l'air primaire et est configuré pour être amené à s'éjecter par les orifices de flamme et pour se diffuser et brûler.

5. Appareil de cuisson à chaleur comprenant l'unité de brûleur à gaz selon l'une quelconque des revendications 1 à 4.
